# EUROPÄISCHE PATENTSCHRIFT

(11) **EP 0 912 457 B1**
(45) Veröffentlichungstag und Bekanntmachung des Hinweises auf die Patenterteilung: **28.11.2001**
(21) Anmeldenummer: 97931762.5
(22) Anmeldetag: 03.07.1997
(51) Int. Cl.: C04B 28/34, C04B 38/02

(54) **SCHAUMSTOFF FÜR BRANDSCHUTZ- UND/ODER ISOLIERZWECKE**
FOAMED MATERIAL FOR FIREPROOFING AND/OR INSULATING
PRODUIT ALVEOLAIRE POUR IGNIFUGATION ET/OU ISOLATION

(30) Priorität: 16.07.1996 DE 19628553
(43) Veröffentlichungstag der Anmeldung: 06.05.1999
(73) Patentinhaber: Chemetall GmbH, 60487 Frankfurt (DE)
(72) Erfinder: BASTIAN, Wolfgang, D-63303 Dreieich (DE); KEMPF, Horst, D-95100 Selb (DE); LIND, Jörg, D-67067 Ludwigshafen (DE); SCHMIDT-HANSBERG, Thomas, D-61250 Usingen (DE)
(74) Vertreter: Uppena, Franz, Dr.
(86) Internationale Anmeldenummer: EP9703517
(87) Internationale Veröffentlichungsnummer: WO9802393

(56) Entgegenhaltungen:
- EP-A- 0 282 240
- WO-A-85/00586
- DE-A- 2 744 393
- DE-A- 2 756 198

## Beschreibung

Die Erfindung bezieht sich auf einen Schaumstoff für Brandschutz- und/oder Isolierzwecke, bestehend aus 30 bis 90 Gewichtsteilen einer Lösung, die 20 bis 70 Gew% Al(H₂PO₄)₃ und 30 bis 80 Gew% Wasser enthält, aus 5 bis 55 Gewichtsteilen eines Gemischs, das 10 bis 70 Gew% MgO, 0 bis 70 Gew% Glimmer, 0 bis 70 Gew% Aluminiumhydroxid und 1 bis 20 Gew% MnO₂ enthält, sowie aus 1 bis 30 Gewichtsteilen eines Schaumbildners, der 3 bis 33 Gew% H₂O₂ und 67 bis 97 Gew% Wasser enthält. Unter dem Begriff "Isolierzwecke" ist im Sinn der Erfindung der Einsatz des erfindungsgemäßen Schaumstoffs für die Wärme- und die Schallisolierung zu verstehen.

Aus der DE-OS 27 44 393 ist ein Verfahren zur Herstellung hochtemperaturbeständiger, wasserfester Formkörper mit niedriger Rohdichte von unter 400 g/l, mit hoher Druckfestigkeit und mit hoher Maßhaltigkeit bekannt. Bei diesem Verfahren werden nichtexpandierter Vermiculit oder Dreischicht-Minerale mit einer Wasserstoffperoxid-Lösung, die mindestens 5 Gew.-% H₂O₂ enthält, und mit einer Mono-Aluminium-Phosphat-Lösung oder mit Phosphorsäure und mit einer bestimmten Menge Flüssigkeit bei Raumtemperatur in einer Arbeitsstufe vermischt. Danach wird die Masse bei Raumtemperatur während etwa 30 min oder bei einer Temperatur von ca. 50°C während etwa 5 min vorexpandiert. Anschließend wird die feuchte Masse in eine geschlossene Form eingefüllt, wobei Sauerstoff und Wasserdampf austreten. Beim Expandier- und Abbinde-Vorgang wird auf 80 bis 300°C erwärmt, wobei sich der Formkörper unter dem Druck der expandierenden Masse in der geschlossenen Form bildet. Gleichzeitig werden die Mineralien mit der Mono-Aluminium-Phosphat-Lösung oder mit der Phosphorsäure abgebunden.

Aus der EP-OS 0 282 240 ist ein leichter, feuerfester und isolierender Schaumstoff bekannt, der durch Mischung einer wäßrigen, sauren Lösung eines Bindemittels mit einem hydrophobierten porösen Mineral und mit einem Oxid oder Hydroxid eines Erdalkalimetalls oder des Aluminiums und mit einem festen anorganischen Treibmittel hergestellt wird. Als Bindemittel wird Mono-Aluminium-Dihydrogenphosphat, ein Dihydrogenphosphat eines Erdalkalimetalls oder eine Mischung dieser Phosphate verwendet. Als hydrophobiertes, poröses Mineral wird expandierter Perlit verwendet, der seine hydrophoben Eigenschaften durch eine spezielle Behandlung erhält. Als anorganisches Treibmittel werden Carbonate, insbesondere ein Gemisch aus Calciumcarbonat und Magnesiumcarbonat, verwendet. Der Schaumstoff kann zusätzlich 5 bis 15 % Ton, 5 bis 20 % Talcum und/oder 1 bis 8 % Bentonit enthalten.

Die WO 85/00586 offenbart einen anorganischen Schaumstoff, der 7 bis 10 % Magnesiumoxid, 60 bis 65 % eines Silicats und eines Aggregats und 25 bis 33 % einer wäßrigen, sauren Aluminiumoxid-Lösung enthält. Das Aggregat ist porös, hat eine geringe Dichte und enthält beispielsweise Perlit, Vermiculit oder Glasperlen. Als Treibmittel enthält der anorganische Schaumstoff ein Carbonat, vorzugsweise Dolomit. Die saure Lösung von Aluminiumoxid enthält Phosphorsäure, so daß in dieser Lösung Mono-Aluminium-Phosphat vorliegt.

Aus der DE-OS 27 56 198 ist ein anorganischer Schaumstoff auf Basis von Metallsalzen der Phosphorsäure bekannt, bei dem das Verhältnis der Gesamtzahl der die Salze bildenden Metallatome zur Gesamtzahl der Phosphoratome 2 : 3 bis 2 : 1 beträgt und bei dem die die Salze bildenden Metalle mindestens ein mehrwertiges Metall umfassen, wobei das Äquivalenzverhältnis der Gesamtvalenzen des Metalls zu den Gesamtvalenzen des Phosphations 0,65 bis 0,95 beträgt. Der bekannte Schaumstoff besteht aus diskreten Zellen mit einem mittleren Durchmesser von 3 mm oder weniger und hat ein spezifisches Gewicht kleiner 0,15. Das mehrwertige Metall des Schaumstoffs ist mindestens ein zweiwertiges und/oder dreiwertiges Metall, wobei als mehrwertiges Metall bevorzugt Magnesium, Zink und/oder Aluminium verwendet wird. Zusätzlich enthält der Schaumstoff ein Alkalimetall. Im Schaumstoff sind Zuschlagsstoffe, Verstärkungsmaterialien und Füllstoffe enthalten. Außerdem kann der Schaumstoff hydrophobe Gruppen enthalten, die an das Metallphosphat chemisch gebunden sind und bei denen es sich um organische Stickstoff- oder Phosphorverbindungen handelt. Der bekannte Schaumstoff eignet sich zur Wärmeisolierung. Der Schaumstoff wird aus einem Metallphosphat mit mindestens einem mehrwertigen Metall, einem Karbonat eines mehrwertigen Metalls und Wasser hergestellt, wobei die Mischung schäumt und bei Normaltemperatur aushärtet.

Aus der EP-PS 0 136 378 ist ein Zweikomponentensystem zur Bildung eines anorganischen Harzes bekannt, das als Werkstoff für den Brandschutz und die Wärmeisolierung verwendet werden kann. Das Zweikomponentensystem besteht aus einer flüssigen Komponenten A, die eine wäßrige Lösung von Aluminiumdihydrogenphosphat und/oder Magnesiumhydrogenphosphat enthält, und aus einer flüssigen Komponente B, die eine wäßrige Suspension eines phosphatreaktiven Bestandteils enthält, der Wollastonit, Ca₃(Si₃O₉) und/oder Magnesiumoxid ist, wobei die Viskosität jeder Komponente derart gewählt wird, daß die zwei Komponenten unter Bildung einer Aufschlämmung schnell und gründliche gemischt werden können, welche exotherm unter Bildung des anorganischen Harzes reagiert. Bei dem bekannten Zweikomponentensystem ist vorgesehen, daß die Komponente B zusätzlich ein nichtreaktives Phosphatdispergiermittel umfaßt und daß beide Komponenten jeweils eine Viskosität von 700 bis 10 000 Centipoises bei 25°C besitzen. In der EP-PS 0 136 378 wird ferner vorgeschlagen, daß die Komponente A ein inertes Füllmittel in einer Menge bis zu 50 Gew% des Gesamtgewichts der Komponenten A und B einschließt, wobei als Füllmittel vorzugsweise SiO₂ verwendet wird und wobei das Füllmittel ein vorgeformtes, zellenartiges Material ist. Beide Komponenten des bekannten Zweikomponentensystems können ein wasserabstoßendes, oberflächenaktives Mittel in einer Gesamtmenge von 0,2 bis 5 Gew% des Gesamtgewichts der Komponenten A und B enthalten, wobei das Mittel aus hydrophobem SiO₂, einem Titanat, einem Silikon, einem Wachs oder einem Stearat besteht. Die Komponente A hat einen Feststoffgehalt von 20 bis 70 Gew%. Zur Herstellung eines Harzes mit einem zellartigen Aufbau wird das bekannte Zweikomponentensystem in der Weise modifiziert, daß beide Komponenten A und B ein wasserabstoßendes, oberflächenaktives Mittel enthalten, daß die Komponente B ein Treibmittel enthält, welches ein Gas durch Reaktion, Zersetzung oder Verdampfung in die Aufschlämmung freisetzen kann, und daß das Dispergiermittel den pH-Wert der Aufschlämmung nicht über 10 erhöht. Als Treibmittel wird vorzugsweise CaCO₃ in einer Menge von 0,2 bis 15 Gew% des Gesamtgewichts der Komponenten A und B eingesetzt.

Die EP-PS 0 147 390 offenbart einen Stoff, der für Brandschutz- und Isolierzwecke eingesetzt werden kann und der aus MgO, Al₂O₃, Aluminiumdihydrogenphosphat und Wasser besteht. Dieser Stoff wird aus einer nichtammoniakalischen, formbaren Mischung aus MgO, Al₂O₃, einem Aggregat und einer sauren Lösung aus wäßrigem Aluminiumdihydrogenphosphat erhalten. Als Aggregat werden vorzugsweise Glasperlen, Perlite, Steine oder feuerfeste Materialien verwendet. Der Stoff kann beispielsweise 10 Gew% MgO, 30 Gew% Al₂O₃, 30 Gew% Aggregat und 30 Gew% saure Lösung enthalten. Mit dem aus der EP-PS 0 147 390 bekannten Stoff werden Paneele beschichtet.

Im deutschen Patent 1 95 24 563 wird ein anorganischer Schaumstoff, bestehend aus 40 bis 90 Gewichtsteilen einer Lösung, die 20 bis 70 Gew% Al (H₂PO₄)₃ und 30 bis 80 Gew% Wasser enthält, aus 5 bis 55 Gewichtsteilen eines Gemischs, das 10 bis 70 Gew% MgO, 10 bis 70 Gew% Glimmer, 10 bis 70 Gew% Aluminiumhydroxid und 2 bis 20 Gew% MnO₂ enthält, sowie aus 1 bis 30 Gewichtsteilen eines Schaumbildners, der 3 bis 33 Gew% H₂O₂ und 67 bis 97 Gew% Wasser enthält, vorgeschlagen. Dieser Schaumstoff eignet sich für den Brandschutz sowie für die Wärme- und Schallisolierung.

Es hat sich gezeigt, daß der im deutschen Patent 1 95 24 563 vorgeschlagene anorganische Schaumstoff bezüglich seiner Verarbeitbarkeit verbessert, bezüglich bestimmter Eigenschaften verändert und modifiziert sowie bezüglich seiner Wirtschaftlichkeit bzw. Preiswürdigkeit verbessert werden muß. Daher liegt der Erfindung die Aufgabe zugrunde, den eingangs beschriebenen Schaumstoff hinsichtlich seiner Verarbeitbarkeit zu verbessern, hinsichtlich seiner Eigenschaften zu modifizieren und dadurch seine Anwendbarkeit zu erweitern bzw. zu verbessern sowie seine Wirtschaftlichkeit durch die Verwendung geeigneter, billiger Rohstoffe zu erhöhen.

Die der Erfindung zugrundeliegende Aufgabe wird durch einen Schaumstoff für Brandschutz- und/oder Isolierzwecke der eingangs genannten Art gelöst, bei dem das Gemisch zusätzlich 1 bis 60 Gew% mindestens eines anorganischen Füllstoffs und/oder 1 bis 60 Gew% mindestens eines organischen Verarbeitungshilfsmittels enthält. Nach der Erfindung ist ferner vorgesehen, daß als anorganischer Füllstoff Bauxit, Borsäure, Borax, Cordierit, Feldspate, Gips, Kaoline, Lepidolith, Lithiumsalze, Magnesiumhydroxid, Mullit, Perlite, Schamotte, Siliciumcarbid, Spodumen, Tone, Vermicult, Zeolithe und/oder Stoffe mit einem SiO₂-Gehalt > 70 Gew% verwendet werden und daß als organisches Verarbeitungshilfsmittel Polyacrylsäureester, Polyurethane, Polyvinylalkohol, Polyethylen, Latices, Stärke, Cellulose, Dextrine, Melasse und/oder Ligninsulfonsäuren verwendet werden. Der Schäumungsfaktor des erfindungsgemäßen Schaumstoffs liegt bei ca. 2 bis ca. 10, d.h., daß das Volumen des Schaumstoffs etwa 2 bis 10 mal größer ist, als das Volumen der Ausgangsstoffe. Der erfindungsgemäße Schaumstoff hat eine vom Raumgewicht abhängige, relativ hohe mechanische Festigkeit und ein Raumgewicht von ca. 100 bis 800 kg/m³. Er eignet sich sehr gut zur Wärme- und Schallisolierung; seine Wärmeleitfähigkeit ist sehr gering. Wenn der erfindungsgemäße Schaumstoff keine oder geringe Mengen organischer Verarbeitungshilfsmittel enthält, ist er nicht entflammbar und daher für Brandschutzzwecke besonders geeignet. Durch die anorganischen Füllstoffe Borsäure, Borax und Lithiumsalze wird die Rißbildung im Schaumstoff unterdrückt, wenn er bei seinem Einsatz für Brandschutzzwecke hohen Temperaturen ausgesetzt ist, da Borsäure, Borax und Lithiumsalze bei hohen Temperaturen als Sinterhilfsmittel wirken und dadurch die Rißbildung im Schaumstoff unterdrücken. Die anorganischen Füllstoffe Bauxit, Gips, Magnesiumhydroxid und Zeolithe dienen vorrangig zur Bindung von Wasser, das durch die Aluminiumdihydrogenphosphat-Lösung und die H₂O₂-Lösung in den Schaumstoff eingebracht wird. Durch die Bindung des Wassers wird ein Kühleffekt erreicht. Die anorganischen Füllstoffe Cordierit, Feldspate, Lepidolith, Mullit, Schamotte, Siliciumcarbid, Spodumen und Stoffe mit einem SiO₂-Gehalt größer 70 Gew% vermindern in vorteilhafter Weise die thermische Ausdehnung des erfindungsgemäßen Schaumstoffs, was sich positiv auf die Formhaltigkeit und mechanische Festigkeit der Schaumstoffe auswirkt, die höheren Temperaturen oder wechselnden Temperaturen ausgesetzt sind. Durch die anorganischen Füllstoffe Kaoline und Tone wird beim erfindungsgemäßen Schaumstoff die Plastizität erhöht und die Porenstruktur verfeinert. Die mit Tonen und/oder Kaolinen modifizierten Schaumstoffe haben insbesondere bei ihrem Einsatz zur Schallisolierung gute Festigkeitseigenschaften, denn ihre Struktur wird auch durch Schallwellen niedriger Frequenz nicht verändert. Die anorganischen Füllstoffe Perlite und Vermiculit erniedrigen das spezifische Gewicht und erhöhen die wärmeisolierende Wirkung des erfindungsgemäßen Schaumstoffs in vorteilhafter Weise, so daß diese Füllstoffe insbesondere dann eingesetzt werden, wenn der Schaumstoff für Brandschutzzwecke oder zur Wärmeisolierung verwendet wird.

Bauxit ist ein mit Eisenoxid verunreinigtes Al₂O₃, das außerdem Wasser und geringe Mengen SiO₂ enthält. Cordierit ist ein Magnesium-Aluminium-Silikat der Formel Mg₂Al₄Si₅O₁₈. Feldspate sind komplexe Silikate des Aluminiums, die zwei ungefähr senkrecht zueinanderliegende Spaltebenen aufweisen. Zu den Feldspaten gehören z.B. die Mineralien Albit und Anorthit. Als Kaoline werden hydrolysierte Alumosilikate bezeichnet. Lepidolith ist ein Kalium-Lithium-Alumosilikat, das in Form kleiner Schuppen vorliegt. Als Lithiumsalze werden vorzugsweise LiF und LiCl verwendet. Mullit ist ein rhombisch kristallisiertes Alumosilikat mit der Zusammensetzung 3Al₂O₃ x SiO₂ bis 2Al₂O₃ x SiO₂. Bei Perliten handelt es sich um sehr leichte, bimssteinähnliche Gesteinsschäume, die aus bestimmten vulkanischen Gesteinen durch Erhitzen hergestellt werden. Bei Schamotte handelt es sich um stark gebrannten, zerkleinerten, feuerfesten Ton. Spodumen ist ein Lithium-Aluminium-Silikat und hat die Zusammensetzung LiAl (Si₂O₆). Tone sind Aluminiumsilikate mit Phyllo-Silikat-Struktur und unterschiedlichem Wassergehalt. Vermiculit ist ein Magnesium-Aluminium-Silikat mit wechselnden Gehalten an dreiwertigem Eisen. Zeolithe sind kristalline, wasserhaltige Alkali- bzw. Erdalkali-Alumosilikate, die ihr Wasser beim Erhitzen stetig und ohne Änderung der Kristallstruktur abgeben. Als anorganischer Füllstoff sind auch Stoffe geeignet, die einen SiO₂-Gehalt größer 70 Gew% aufweisen, wie z.B. Flugasche, Glas oder Glasfritte.

Die organischen Verarbeitungshilfsmittel erhöhen zum einen die Grünfestigkeit des erfindungsgemäßen Schaumstoffs, d.h. sie steigern die Formstabilität und die mechanische Festigkeit des Schaumstoffs während der Aushärtung. Eine derartige Wirkung haben insbesondere Melasse, Stärke und Dextrine. Die Verarbeitungshilfsmittel haben auch eine dispergierende Wirkung auf die anorganischen Feststoffe, wobei insbesondere Polyvinylalkohol und Ligninsulfonsäuren als Dispergiermittel wirken. Eine Plastifizierung des erfindungsgemäßen Schaumstoffs wird insbesondere durch die als Verarbeitungshilfsmittel verwendeten Polyacrylsäureester, Polyurethane, Polyethylen, Latices, Polyvinylalkohol, Stärke, Dextrine und Cellulose erreicht, wobei die Cellulose in Form von Pulver oder Fasern eingesetzt werden kann. Die organischen Verarbeitungshilfsmittel werden bei der Herstellung des Schaumstoffs dem Feststoffgemisch zugegeben.

In weiterer Ausgestaltung der Erfindung ist vorgesehen, daß das Gemisch als anorganischen Füllstoff 1 bis 50 Gew% Borsäure, 1 bis 60 Gew% Tone, 1 bis 60 Gew% Schamotte und/oder 1 bis 50 Gew% Perlite enthält. In weiterer Ausgestaltung der Erfindung ist ferner vorgesehen, daß das Gemisch als organisches Verarbeitungshilfsmittel 1 bis 40 Gew% Stärke, Cellulose und/oder Dextrine enthält. Die so modifizierten Schaumstoffe haben insbesondere eine gute Temperaturwechselbeständigkeit, d.h., daß die Schaumstoffe auch bei häufig wechselnden Temperaturen ihre mechanische Festigkeit bewahren.

In überraschender Weise hat sich gezeigt, daß das im Schaumstoff enthaltene MnO₂ ganz oder teilweise durch Fe₂O₃ und/oder Cr₂O₃ ersetzt werden kann, denn auch diese beiden Oxide katalysieren den Zerfall von H₂O₂ unter Bildung von Sauerstoff und zwar mit einer solchen Geschwindigkeit, daß eine kontrollierte Schaumbildung möglich ist. Die anstelle des MnO₂ verwendeten Oxide des Eisens und des Chroms enthalten als Verunreinigungen z.B. Calciumoxid, Magnesiumoxid, Bariumoxid und/oder Kupferoxid. Die Substitution des MnO₂ durch Fe₂O₃ und/oder Cr₂O₃ wirkt sich vorteilhaft auf die Preiswürdigkeit des erfindungsgemäßen Schaumstoffs aus.

Nach der Erfindung hat es sich in einigen Fällen als zweckmäßig erwiesen, wenn das Gemisch 10 bis 70 Gew% Aluminiumhydroxid enthält und/oder wenn das Gemisch 10 bis 70 Gew% Glimmer enthält. Das Aluminiumhydroxid beeinflußt vorzugsweise die Festigkeitseigenschaften des Schaumstoffs positiv, während der Glimmer insbesondere die Plastizität des Schaumstoffs positiv beeinflußt. In überraschender Weise hat sich gezeigt, daß der Glimmer ganz oder teilweise durch Talkum ersetzt werden kann. Hierdurch werden die Eigenschaften des Schaumstoffs nicht nachteilig beeinflußt, allerdings wird durch die Verwendung von Talkum eine Verbilligung des Produkts erreicht.

Glimmer sind nach einer Fläche spaltbare Tonerdesilikate, die eine helle Farbe (Muskovit) oder eine dunkle Farbe (Biotit, Phlogopit) haben. Die Härte der Glimmer liegt zwischen 2 und 3 und ihre Dichte beträgt 2,7 bis 3,1. Die Glimmer liegen in bis zu 0,1 *µ*m dünnen, biegsamen Plättchen vor. Talkum ist ein Magnesiumsilikat und bildet glimmerartige Aggregate. Das erfindungsgemäß verwendete Aluminiumhydroxid hat einen Al (OH)₃-Gehalt größer 98 %.

Der erfindungsgemäße Schaumstoff hat ein sehr breites Anwendungsspektrum. Er kann z.B. in der Eisen- und Stahlindustrie, im Ofenbau, im Schornsteinbau, im Fertighausbau und im Schiffbau vorteilhaft für den Brandschutz und die Wärmeisolierung eingesetzt werden. Auch Kessel, Rohre, Öltanks, Stahlträger und Chemikalienbehälter können insbesondere mit dem Ziel der Wärmeisolierung mit dem Schaumstoff ummantelt werden. Schließlich kann der Schaumstoff im Kraftfahrzeugbau sowie in Türen, Fenstern und Fußböden zur Schall- und/oder Wärmedämmung verwendet werden.

Der erfindungsgemäße Schaumstoff wird durch ein Verfahren hergestellt, bei dem zunächst in der wäßrigen Al (H₂PO₄)₃-Lösung durch Rühren bei Raumtemperatur das Gemisch dispergiert wird, das MgO und MnO₂ sowie gegebenenfalls Glimmer, Aluminiumhydroxid, mindestens einen anorganischen Füllstoff und/oder mindestens ein organisches Verarbeitungshilfsmittel enthält, bei dem danach der Schaumbildner in die Dispersion unter Rühren eingebracht wird, bei dem die Mischung anschließend in Hohlräume gefüllt wird, bei dem die Schäumungszeit 0,5 bis 10 Min. beträgt und bei dem schließlich die Abkühlung des Schaumstoffs auf Raumtemperatur eintritt. Die Schaumbildung erfolgt durch den Sauerstoff, der durch die Zersetzung des H₂O₂ entsteht. Während der Schäumungszeit tritt durch die exotherme Reaktion des Al(H₂PO₄)₃ mit dem MgO bzw. dem Glimmer bzw. dem Aluminiumhydroxid eine Erwärmung ein, und gleichzeitig findet durch die Schaumbildung eine Volumenvergrößerung um einen Faktor von 2 bis 10 statt. Die Aushärtezeit des gebildeten Schaums kann zwischen einer Minute und 24 Stunden variiert werden. Das Herstellungsverfahren ermöglicht kurze Mischzeiten für die einzelnen Komponenten des Schaumstoffs sowie eine langsame und gleichmäßige Schaumbildung und Aushärtung des Schaums. Ferner gestattet das Verfahren eine unabhängige Einstellung der Schäumungszeit und des Schäumungsfaktors durch Variation der H₂O₂- und der Braunsteinmenge einerseits und der Aushärtezeit des Schaums durch Variation der MgO-Menge andererseits. Der gebildete Schaum ist feinporig und deshalb besonders stabil; er ist daher insbesondere zum Ausschäumen großer Volumina geeignet. Der Schaumstoff hat eine hohe Festigkeit sowie eine gute Plastizität; diese Eigenschaften können insbesondere durch die anorganischen Füllstoffe und die organischen Verarbeitungshilfsmittel positiv beeinflußt werden. Die Mischung der Schaumstoff-Bestandteile erfolgt in vorteilhafter Weise lediglich in einem Mischaggregat.

Der Gegenstand der Erfindung wird nachfolgend anhand von zwei Ausführungsbeispielen näher erläutert.

In den Tabellen 1 und 2 werden zwei mögliche Zusammensetzungen des erfindungsgemäßen Schaumstoffs angegeben. Beide Zusammensetzungen enthalten jeweils einen anorganischen Füllstoff, der aus mehreren Substanzen besteht. Die Zusammensetzung der Tabelle 2 enthält außerdem ein organisches Verarbeitungshilfsmittel. Die Zusammensetzungen werden in der Weise zu Schaumstoffen verarbeitet, daß die wäßrige Al (H₂PO₄)₃-Lösung zunächst in einem Rührgefäß vorgelegt und daß dann in diese Lösung unter intensivem Rühren bei Raumtemperatur das Gemisch eingetragen wird. Etwa eine Minute nach dem Eintragen des Gemischs in die Lösung wird der Schaumbildner unter intensivem Rühren hinzugegeben. Nach einer Mischzeit von ca. 10 Sekunden tritt während ca. 90 Sekunden die Schaumbildung ein, wobei sich das ursprüngliche Volumen der Stoffmischung auf ca. 400 bis 500 % vergrößert. Der Schaum wird nach ca. 15 Minuten aus dem Rührgefäß entnommen; das Rührgefäß wird also als Form benutzt. Bis zur Entnahme des Schaumstoffs aus dem Rührgefäß erfolgt zwar eine gewisse Härtung, aber noch keine endgültige Verfestigung. Nach 1 bis 3 Tagen wird der aus dem Rührgefäß entnommene Schaumstoffblock in einzelne Probekörper zerteilt, die zu ihrer vollständigen Verfestigung noch einige Tage an der Luft gelagert werden. Nach 14 Tagen werden die Probekörper untersucht. Der Schaumstoff gemäß Tabelle 1 hat nach 14 Tagen ein Raumgewicht von 0,18 g/cm³ und eine Biegefestigkeit von 4,5 N/cm². Der Schaumstoff gemäß Tabelle 2 hat nach 14 Tagen ein Raumgewicht von 0,22 g/cm³ und eine Biegefestigkeit von 13 N/cm². Durch die Verwendung des organischen Verarbeitungshilfsmittels Stärke steigt die Biegefestigkeit des Schaumstoffs gemäß Tabelle 1 also um ca. 200 %. Die Zusammensetzungen der Tabellen 1 und 2 können selbstverständlich auch in kleineren anteiligen Mengen zu einem Schaumstoff verarbeitet werden.

Das verwendete MgO hat eine Reinheit von > 95 % und das Al(OH)₃ hat eine Reinheit > 98 %. Die Teilchengröße des Braunsteins liegt unter 100 *µ*m. Die Teilchengröße des Glimmers beträgt ca. 60 mesh. Die Teilchengröße der Schamotte beträgt zu 97 % < 63 *µ*m. Die Teilchengröße des Tons beträgt zu 95 % < 63 *µ*m. Die verwendete Stärke hat ein Schüttgewicht zwischen 0,3 und 0,5 kg/dm³.

**Tabelle 1**

| | | |
|---|---|---|
| 58 Gewichtsteile (kg) Lösung | 29 kg Al (H₂PO₄)3 | = 50 Gew% |
| | 29 kg H₂O | = 50 Gew% |
| | 58 kg Lösung | = 100 Gew% |
| | | |
| 40,2 Gewichtsteile (kg) Gemisch | 16 kg MgO | = 39,8 Gew% |
| | 5 kg Glimmer | = 12,4 Gew% |
| | 5 kg Al(OH)₃ | = 12,4 Gew% |
| | 2,2 kg MnO₂ | = 5,5 Gew% |
| | 12 kg Füllstoff | = 29,9 Gew% |
| | 40,2 kg Gemisch | = 100 Gew% |
| | | |
| 12 Gewichtsteile (kg) Füllstoff | 1 kg H₃BO₃ | = 2,5 Gew% |
| | 7 kg Schamotte | = 17,4 Gew% |
| | 4 kg Ton | = 10,0 Gew% |
| | 12 kg Füllstoff | = 29,9 Gew%, bezogen auf das Gemisch |
| | | |
| 4 Gewichtsteile (kg) Schaumbildner | 0,72 kg H₂O₂ | = 18 Gew% |
| | 3,28 kg H₂O | = 82 Gew% |
| | 4,0 kg Schaumbildner | = 100 Gew% |

**Tabelle 2**

| | | |
|---|---|---|
| 58 Gewichtsteile (kg) Lösung | 29 kg AL (H₂PO₄)₃ | = 50 Gew% |
| | 29 kg H₂O | = 50 Gew% |
| | 58 kg Lösung | = 100 Gew% |
| | | |
| 50,2 Gewichtsteile (kg) Gemisch | 16 kg MgO | = 31,8 Gew% |
| | 5 kg Glimmer | = 10,0 Gew% |
| | 5 kg Al(OH)₃ = | 10,0 Gew% |
| | 2,2 kg MnO₂ | = 4,4 Gew% |
| | 12 kg Füllstoff | = 23,9 Gew% |
| | 10 kg Stärke | = 19,9 Gew% |
| | 50,2 kg Gemisch | = 100 Gew% |
| | | |
| 12 Gewichtsteile (kg) Füllstoff | 1 kg H₃BO₃ | = 2,0 Gew% |
| | 7 kg Schamotte | = 13,9 Gew% |
| | 4 kg Ton | = 8,0 Gew% |
| | 12 kg Füllstoff | = 23,9 Gew%, bezogen auf das Gemisch |
| 10 Gewichtsteile (kg) Verarbeitungshilfsmittel | 10 kg Stärke | = 19,9 Gew%, bezogen auf das Gemisch |
| 4 Gewichtsteile (kg) Schaumbildner | 0,72 kg H₂O₂ | = 18 Gew% |
| | 3,28 kg H₂O | = 82 Gew% |
| | 4,0 kg Schaumbildner | = 100 Gew% |

## Patentansprüche

1. Schaumstoff für Brandschutz- und/oder Isolierzwecke, bestehend aus 30 bis 90 Gewichtsteilen einer Lösung, die 20 bis 70 Gew% Al (H₂PO₄) ₃ und 30 bis 80 Gew% Wasser enthält, aus 5 bis 55 Gewichtsteilen eines Gemischs, das 10 bis 70 Gew% MgO, 0 bis 70 Gew% Glimmer, 0 bis 70 Gew% Aluminiumhydroxid und 1 bis 20 Gew% MnO₂ enthält, sowie aus 1 bis 30 Gewichtsteilen eines Schaumbildners, der 3 bis 33 Gew% H₂O₂ und 67 bis 97 Gew% Wasser enthält, **dadurch gekennzeichnet, daß** das Gemisch zusätzlich 1 bis 60 Gew% mindestens eines anorganischen Füllstoffs und/oder 1 bis 60 Gew% mindestens eines organischen Verarbeitungshilfsmittels enthält.

2. Schaumstoff nach Anspruch 1, **dadurch gekennzeichnet, daß** als anorganischer Füllstoff Bauxit, Borsäure, Borax, Cordierit, Feldspate, Gips, Kaoline, Lepidolith, Lithiumsalze, Magnesiumhydroxid, Mullit, Perlite, Schamotte, Siliciumcarbid, Spodumen, Tone, Vermiculit, Zeolithe und/oder Stoffe mit einem SiO₂-Gehalt > 70 Gew% verwendet werden.

3. Schaumstoff nach Anspruch 1, **dadurch gekennzeichnet, daß** als organisches Verarbeitungshilfsmittel Polyacrylsäureester, Polyurethane, Polyvinylalkohol, Polyethylen, Latices, Stärke, Cellulose, Dextrine, Melasse und/oder Ligninsulfonsäuren verwendet werden.

4. Schaumstoff nach den Ansprüchen 1 und 2, **dadurch gekennzeichnet, daß** das Gemisch als anorganischen Füllstoff 1 bis 50 Gew% Borsäure, 1 bis 60 Gew% Tone, 1 bis 60 Gew% Schamotte und/oder 1 bis 50 Gew% Perlite enthält.

5. Schaumstoff nach den Ansprüchen 1 und 3, **dadurch gekennzeichnet, daß** das Gemisch als organisches Verarbeitungshilfsmittel 1 bis 40 Gew% Stärke, Cellulose und/oder Dextrine enthält.

6. Schaumstoff nach den Ansprüchen 1 bis 5, **dadurch gekennzeichnet, daß** das MnO₂ ganz oder teilweise durch Fe₂O₃ und/oder Cr₂O₃ ersetzt ist.

7. Schaumstoff nach den Ansprüchen 1 bis 6, **dadurch gekennzeichnet, daß** das Gemisch 10 bis 70 Gew% Aluminiumhydroxid enthält.

8. Schaumstoff nach den Ansprüchen 1 bis 7, **dadurch gekennzeichnet, daß** das Gemisch 10 bis 70 Gew% Glimmer enthält.

9. Schaumstoff nach den Ansprüchen 1 bis 8, **dadurch gekennzeichnet, daß** der Glimmer ganz oder teilweise durch Talkum ersetzt ist.

## Claims

1. Foamed material for fire-protection and/or insulating purposes, consisting of 30 to 90 parts by weight of a solution which contains 20 to 70 % by weight Al(H₂PO₄)₃ and 30 to 80 % by weight water, of 5 to 55 parts by weight of a mixture which contains 10 to 70 % by weight MgO, 0 to 70 % by weight mica, 0 to 70 % by weight aluminium hydroxide and 1 to 20 % by weight MnO₂, and also of 1 to 30 parts by weight of a foaming agent which contains 3 to 33 % by weight H₂O₂ and 67 to 97 % by weight water, **characterized in that** the mixture additionally contains 1 to 60 % by weight of at least one inorganic filler and/or 1 to 60 % by weight of at least one organic processing aid.

2. Foamed material according to claim 1, **characterized in that** bauxite, boric acid, borax, cordierite, feldspars, gypsum, kaolins, lepidolite, lithium salts, magnesium hydroxide, mullite, pearlite, fire-clay, silicon carbide, spodumene, clays, vermiculite, zeolites and/or substances having an SiO₂-content >70% by weight are used as the inorganic filler.

3. Foamed material according to claim 1, **characterized in that** polyacrylates, polyurethanes, polyvinyl alcohol, polyethylene, latexes, starch, cellulose, dextrins, molasses and/or lignosulphonic acids are used as the organic processing aid.

4. Foamed material according to claims 1 and 2, **characterized in that** the mixture contains 1 to 50 % by weight boric acid, 1 to 60 % by weight clays, 1 to 60 % by weight fire-clay and/or 1 to 50 % by weight pearlite as the inorganic filler.

5. Foamed material according to claims 1 and 3, **characterized in that** the mixture contains 1 to 40 % by weight starch, cellulose and/or dextrins as the organic processing aid.

6. Foamed material according to claims 1 to 5, **characterized in that** the MnO₂ is replaced completely or partly by Fe₂O₃ and/or Cr₂O₃.

7. Foamed material according to claims 1 to 6, **characterized in that** the mixture contains 10 to 70 % by weight aluminium hydroxide.

8. Foamed material according to claims 1 to 7, **characterized in that** the mixture contains 10 to 70 % by weight mica.

9. Foamed material according to claims 1 to 8, **characterized in that** the mica is replaced completely or partly by talc.

## Revendications

1. Produit alvéolaire pour ignifugation et/ou isolation, constitué
• de 30 à 90 parties en poids d'une solution qui contient de 20 à 70 % en poids de Al(H₂PO₄)₃ et de 30 à 80 % en poids d'eau,
• de 5 à 55 parties en poids d'un mélange qui contient de 10 à 70 % en poids de MgO, de 0 à 70 % en poids de mica, de 0 à 70 % en poids d'hydroxyde d'aluminium et de 1 à 20 % en poids de MnO₂, ainsi que
• de 1 à 30 parties en poids d'un agent d'expansion qui contient de 3 à 33 % en poids de H₂O₂ et de 67 à 97 % en poids d'eau,
**caractérisé par le fait que** le mélange contient en outre de 1 à 60 % en poids d'au moins une charge minérale et/ou de 1 à 60 % en poids d'au moins un adjuvant de mise en oeuvre organique.

2. Produit alvéolaire selon la revendication 1, **caractérisé par le fait que** l'on utilise, comme charge minérale, de la bauxite, de l'acide borique, du borax, de la cordiérite, des feldspaths, du gypse, du kaolin, de la lépidolithe, des sels de lithium, de l'hydroxyde de magnésium, de la mullite, de le perlite, de la chamotte, du carbure de silicium, du spodumène, des argiles, de la vermiculite, des zéolithes, et/ou des matières ayant une teneur en SiO₂ supérieure à 70 % en poids.

3. Produit alvéolaire selon la revendication 1, **caractérisé par le fait que** l'on utilise en tant qu'adjuvant de mise en oeuvre organique du poly(ester d'acide acrylique), des polyuréthannes, du poly(alcool vinylique), du polyéthylène, des latex, de l'amidon, de la cellulose, des dextrines, de la mélasse et/ou de l'acide lignine-sulfonique.

4. Produit alvéolaire selon la revendication 1 ou 2, **caractérisé par le fait que** le mélange contient, en tant que charge minérale, de 1 à 50 % en poids d'acide borique, de 1 à 60 % en poids d'argiles, de 1 à 60 % en poids de chamotte et/ou de 1 à 50 % en poids de perlite.

5. Produit alvéolaire selon les revendications 1 et 3, **caractérisé par le fait que** le mélange contient, en tant qu'adjuvant de mise en oeuvre organique, de 1 à 40 % en poids d'amidon, de cellulose et/ou de dextrines.

6. Produit alvéolaire selon les revendications 1 à 5, **caractérisé par le fait que** le MnO₂ est partiellement ou totalement remplacé par du Fe₂O₃ et/ou du Cr₂O₃.

7. Produit alvéolaire selon les revendications 1 à 6, **caractérisé par le fait que** le mélange contient de 10 à 70 % en poids d'hydroxyde d'aluminium.

8. Produit alvéolaire selon les revendications 1 à 7, **caractérisé par le fait que** le mélange contient de 10 à 70 % en poids de mica.

9. Produit alvéolaire selon les revendications 1 à 8, **caractérisé par le fait que** le mica est partiellement ou totalement remplacé par du talc.
